# EUROPÄISCHE PATENTANMELDUNG

(11) **EP 3 869 743 A2**
(43) Veröffentlichungstag der Anmeldung: **25.08.2021**
(21) Anmeldenummer: 21154698.1
(22) Anmeldetag: 02.02.2021
(51) Int. Cl.: H04L 12/40, G05D 1/02

(54) **SENSORVORRICHTUNG ZUR UMFELDERFASSUNG FÜR EIN KRAFTFAHRZEUG**

(30) Priorität: 20.02.2020 DE 102020001083
(71) Anmelder: MAN Truck & Bus SE, 80995 München (DE)
(72) Erfinder: Ruch, Florian, 80995 München (DE); Grübl, Wolfgang, 80995 München (DE); Verhelst, Jose, 80995 München (DE); Braun, Reimar, 80995 München (DE)
(74) Vertreter: v. Bezold & Partner Patentanwälte - PartG mbB

(57) **Zusammenfassung**

Die Erfindung betrifft eine Sensorvorrichtung (10) zur Umfelderfassung für ein Kraftfahrzeug (20), aufweisend eine Steuereinrichtung (1) zur Verarbeitung sensorisch erfasster Umfelddaten, eine erste Sensoreinrichtung (2.1) zur Aufnahme erster Umfelddaten und eine zweite Sensoreinrichtung (2.2) zur Aufnahme zweiter Umfelddaten. Dabei ist vorgesehen, dass die erste Sensoreinrichtung (2.1) über einen ersten Datenbus (B₁) mit der Steuereinrichtung (1) verbunden ist und die zweite Sensoreinrichtung (2.2) über einen zweiten Datenbus (B₂) sowohl mit der Steuereinrichtung (1) als auch mit der ersten Sensoreinrichtung (2.1) verbunden ist. Auf vorteilhafte Weise wird dadurch eine Kopplung der beiden Datenbusse B₁ und B₂ über die erste Sensoreinrichtung (2.1) ermöglicht, wodurch je nach Anwendungsfall verschiedene Übertragungskanäle zur Verfügung stehen. Ferner betrifft die Erfindung auch ein Kraftfahrzeug (20) aufweisend eine derartigen Sensorvorrichtung (10) zur Umfelderfassung.

## Beschreibung

Die Erfindung betrifft eine Sensorvorrichtung zur Umfelderfassung für ein Kraftfahrzeug sowie ein Kraftfahrzeug mit einer derartigen Sensorvorrichtung.

Zur Unterstützung des Fahrers und zur Erhöhung der Sicherheit verfügen heutige Kraftfahrzeuge üblicherweise über eine Reihe von Fahrerassistenzsystemen, darunter z. B. über Spurhalte-, Abbiege- und/oder Notbremsassistenzsysteme. Eine wesentliche Grundlage für die Funktion dieser Fahrerassistenzsysteme bilden dabei Umfelddaten über die momentane Fahrzeugumgebung, welche den Fahrerassistenzsystemen zumeist über am Fahrzeug selbst angebrachte Sensoren zur Umfelderfassung, beispielsweise Radar-, Ultraschall- und/oder Kameraeinrichtungen, bereitgestellt werden.

Für eine möglichst schnelle und fehlertolerante Kommunikation zwischen den verschiedenen Sensoren und den entsprechenden Fahrerassistenzsystemen bzw. Steuergeräten sind im Stand der Technik eine Reihe von Bussystemen, z. B. CAN-, LIN-, MOST- oder FlexRay-BUS, bekannt, mittels derer ein zuverlässiger Datenaustausch zwischen diesen Komponenten ermöglicht werden kann. Üblicherweise wird hierbei jeder der angeschlossenen Busteilnehmer über eine zugeordnete eindeutige Adresse angesprochen, wobei zur Kommunikation busspezifische, standardisierte Datenpakete bzw. Datenframes verwendet werden.

In der Praxis weisen vorgenannte Bussysteme im Kraftfahrzeugbereich oftmals eine komplexe Netzwerktopologie mit einer großen Anzahl an Bussegmenten und Busteilnehmern auf. Zusätzlich können einzelne Busteilnehmer dabei als Master-Slave-Einheiten ausgebildet sein. Entsprechend ist eine nachträgliche Integration neuer Funktionen in eine bestehende Bussystemarchitektur, insbesondere im Fall, dass hierfür neue Teilnehmerverknüpfungen benötigt werden, häufig nicht ohne Weiteres möglich. Weiterhin problematisch an derartigen in der Praxis verwendeten komplexen Netzwerktopologien ist, sicherzustellen, dass sicherheitsrelevante Umfeldinformationen, ggf. priorisiert, über verschiedene Hierarchiestufen hinweg möglichst schnell zu den entsprechenden Fahrerassistenzsystemen (z. B. ein Notbremsassistenzsystem) übertragen werden können.

Bislang im Stand der Technik bekannte Bussystemarchitekturen für Kraftfahrzeuge bieten bezüglich dieser Problematik zumeist nur unzureichende Lösungen. Entsprechend ist es daher Aufgabe der Erfindung, eine verbesserte und/oder alternative Netzwerkarchitektur bereitzustellen, mittels derer sensorisch erfasste Umfelddaten zuverlässig und in möglichst kurzer Zeit zwischen verschiedenen Teilnehmern übertragen werden können. Insbesondere ist es dabei eine Aufgabe der Erfindung, eine Lösung bereitzustellen, die im Falle sicherheitsrelevanter Informationen einen möglichst schnellen Austausch der entsprechenden Informationen ermöglicht.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Nach einem ersten unabhängigen Lösungsgedanken wird eine Sensorvorrichtung zur Umfelderfassung bereitgestellt. Bevorzugt handelt es sich hierbei um eine Sensorvorrichtung zur Umfelderfassung für ein Kraftfahrzeug. Die Sensorvorrichtung umfasst dabei eine Steuereinrichtung, vorzugsweise eine Steuereinrichtung zur Verarbeitung sensorisch erfasster Umfelddaten, sowie eine Sensoreinrichtung, die im Folgenden zur besseren Unterscheidbarkeit von weiteren Sensoreinrichtungen als "erste Sensoreinrichtung" bezeichnet werden soll.

Die erste Sensoreinrichtung, die z. B. eine Front-Radareinrichtung sein kann, soll hierbei eine Sensoreinrichtung zur Aufnahme "erster", d. h. der ersten Sensoreinrichtung zugeordneter, Umfelddaten sein. Als "Umfelddaten" können hierbei generell alle Informationen über einen Raumbereich in einer Umgebung der Sensoreinrichtung (z. B. in einem Front-, Heck- und/oder Seitenbereich des Kraftfahrzeugs) verstanden werden. Vorzugsweise enthalten diese ersten Umfelddaten dabei Informationen bezüglich anderer Verkehrsteilnehmer, der Infrastruktur, statischer Objekte und/oder den Straßenverhältnissen.

Die erste Sensoreinrichtung ist ferner über einen, vorzugsweise als CAN-Bus ausgebildeten, ersten Datenbus mit der Steuereinrichtung verbunden. Der erste Datenbus kann dabei zur Übertragung der Umfelddaten zwischen den, mit dem ersten Datenbus verbundenen, Einrichtungen ausgelegt sein. Vorzugsweise sollen über den ersten Datenbus jedoch auch weitere Daten, wie z. B. Kommunikationsdaten und/oder Steuerbefehle, ausgetauscht werden können.

Weiterhin umfasst die Sensorvorrichtung eine weitere, d. h. zweite, Sensoreinrichtung. Diese zweite Sensorvorrichtung, die z. B. eine Seiten-Radareinrichtung sein kann, soll dabei zur Aufnahme "zweiter", d. h. der zweiten Sensoreinrichtung zugeordneter, Umfelddaten ausgebildet sein. Hierbei können die ersten und zweiten Umfelddaten z. B. unterschiedliche Raumbereiche der Fahrzeugumgebung betreffen. Beispielsweise können die ersten Umfelddaten Informationen über einen Frontbereich vor dem Kraftfahrzeug und die zweiten Umfelddaten Informationen über einen Seitenbereich neben dem Kraftfahrzeug enthalten. Ferner ist die zweite Sensoreinrichtung über einen, vorzugsweise als CAN-Bus ausgebildeten, zweiten Datenbus mit der Steuereinrichtung verbunden. Wie dabei bereits durch die Bezeichnung "erster" und "zweiter" Datenbus ausgedrückt werden soll, handelt es sich bei dem zweiten Datenbus um eine vom ersten Datenbus verschiedene bzw. gesonderte Datenverbindung. Vorzugsweise erfolgt in der Steuereinrichtung sodann eine Verarbeitung der sensorisch erfassten Umfelddaten, d. h,. mit anderen Worten kann die Steuereinrichtung eine Steuereinrichtung zur Verarbeitung der ersten und zweiten Umfelddaten sein.

Um nun auf vorteilhafte Weise einen zusätzlichen Datenaustausch zwischen den beiden Datenbussen zu ermöglichen, ist die zweite Sensoreinrichtung über den zweiten Datenbus auch mit der ersten Sensoreinrichtung verbunden. Mit anderen Worten kann über die erste Sensoreinrichtung somit eine Kopplung des ersten und zweiten Datenbusses erfolgen. So können z. B. die zweiten Umfelddaten der zweiten Sensoreinrichtung zum einen direkt über den zweiten Datenbus an die Steuereinrichtung übertragen werden; zudem oder alternativ können die zweiten Umfelddaten jedoch auch "über" die erste Sensoreinrichtung und den daran geschlossenen ersten Datenbus zur Steuereinrichtung gelangen. Auf vorteilhafte Weise wird über den zusätzlichen Übertragungskanal "über" die Sensoreinrichtung ein Nachrüsten bzw. Einfügen neuer Funktionen in einen bestehenden Datenbus ermöglicht, ohne dass hierzu Änderungen an den bisherigen Übertragungswegen vorgenommen werden müssen, was wiederum in Hinblick auf die Erteilung einer Betriebserlaubnis (Homologation) Vorteile bietet. So können im vorliegenden Fall beispielsweise bestehende Funktionen/Assistenzsysteme weiterhin unverändert über den zweiten Datenbus betreiben werden, während neue Funktionen durch das entsprechende "Abzweigen" der Sensordaten über die erste Sensoreinrichtung bzw. den ersten Datenbus integriert werden können. Ferner bietet die zusätzliche Kopplung der Datenbusse auf vorteilhafte Weise die Möglichkeit einer der Steuereinrichtung vorgeschalteten Vorverarbeitung und/oder Aufbereitung der Umfelddaten durch die erste Sensoreinrichtung.

Gemäß einem ersten Aspekt der Erfindung kann die erste Sensoreinrichtung ausgebildet sein, zweite Umfelddaten über den zweiten Datenbus (B2) zu empfangen und anschließend die ersten Umfelddaten mit den empfangenen zweiten Umfelddaten zu fusionieren und die fusionierten Umfelddaten über den ersten Datenbus an die Steuereinrichtung auszugeben. Mit anderen Worten kann die erste Sensoreinrichtung eine Sensoreinrichtung zur Aufnahme und Verarbeitung von Umfelddaten sein. Hierzu kann die erste Sensoreinrichtung zumindest über eine Recheneinrichtung, z. B. einen Prozessor oder dergleichen, für eine sensorseitige Verarbeitung und/oder Verknüpfung (Fusionierung) der Umfelddaten verfügen. Lediglich beispielhaft kann es sich bei den zu fusionierenden ersten und zweiten Umfelddaten z. B. um Umfelddaten verschiedener Radareinrichtungen (Front- und Seitenradar) handeln. Zudem oder alternativ kann die erste Sensoreinrichtung jedoch auch ausgebildet sein, Umfelddaten verschiedener Sensortypen, z. B. Umfelddaten einer Radar- und einer Kameraeinrichtung, zu fusionieren und anschließend an die Steuereinrichtung zu übertragen. Durch das vorgelagerte Verarbeiten der Umfelddaten kann insgesamt auf vorteilhafte Weise eine Entlastung der (zentralen) Steuereinrichtung erreicht werden. Ferner kann durch die dezentrale Vorverarbeitung bereits zu einem frühen Zeitpunkt eine entsprechende Selektion und/oder Priorisierung der erfassten Umfeldinformationen erfolgen, wodurch insgesamt der Datenverkehr im Bussystem optimiert werden kann.

Nach einem weiteren Aspekt der Erfindung kann der erste Datenbus eine höhere, vorzugsweise eine doppelt oder vielfach (z. B. drei- oder vierfach) so hohe, Übertragungsrate als der zweite Datenbus aufweisen. Beispielsweise kann der erste Datenbus eine Übertragungsrate von 2 Mbit/s besitzen, während der zweite Datenbus eine Übertragungsrate von 500 kbit/s besitzen kann. Bevorzugt soll der zweite Datenbus eine Übertragungsrate von maximal 1 Mbit/s aufweisen. Der Vorteil dieser Varianten liegt darin, dass dadurch eine bedarfsgerechte Lastverteilung zwischen den Datenbussen bzw. eine Priorisierung der Daten ermöglicht wird, sodass z. B. besonders sicherheitskritische Informationen möglichst schnell zur Steuereinrichtung übertragen werden können.

Gemäß einem ersten Aspekt der Erfindung kann der erste Datenbus eine Übertragungsrate über 1 Mbit/s aufweisen. Zudem oder alternativ kann der erste Datenbus auch eine Übertragungsrate von maximal 2 Mbit/s, vorzugsweise maximal 4 Mbit/s, besonders bevorzugt maximal 8 Mbit/s, aufweisen. Weiterhin kann der erste Datenbus zudem oder alternativ auch als ein CAN-FD-Bus ausgebildet sein. Letzterer stellt eine Erweiterung des "klassischen" CAN-Buses dar und erlaubt z. B. das Versenden einer größer Datenmenge. Der CAN-FD-Bus wird durch den Standard ISO 11898-1:2015 definiert. Alle diese Ausführungsformen stellen dabei auf vorteilhafte Weise eine möglichst schnelle Kommunikation zwischen der ersten Sensoreinrichtung und der Steuereinrichtung sicher.

Nach einem weiteren Aspekt der Erfindung kann die erste Sensoreinrichtung eine Front-Radareinrichtung des Kraftfahrzeugs sein. Als Front-Radareinrichtung soll dabei eine Radareinrichtung verstanden werden, die zur Erfassung eines in normaler Fahrtrichtung im Wesentlichen vor dem Kraftfahrzeug liegenden Bereich ausgebildet ist. Beispielsweise kann die Front-Radareinrichtung dabei ein Teil eines Notbremsassistenz-Systems und/oder eines Adaptive-Cruise-Control-Systems sein.

Zudem oder alternativ kann die erste Sensoreinrichtung auch eine "erste" Busschnittstelle und eine "zweite" Busschnittstelle umfassen, wobei die erste Busschnittstelle an den ersten Datenbus und die zweite Busschnittstelle an den zweiten Datenbus angeschlossen sein soll. Anders ausgedrückt kann mittels der ersten und zweiten Busschnittstelle - die vorzugsweise jeweils als CAN-Transceiver ausgebildet sind - eine Ankopplung der ersten Sensoreinrichtung an den ersten bzw. zweiten Datenbus erfolgen. Weiterhin kann sowohl die erste als auch die zweite Busschnittstelle jeweils zwei "gekoppelte" Anschlüsse umfassen. Mit anderen Worten sollen die jeweils gekoppelten Anschlüsse "parallel geschaltet" bzw. "durchgeschleift" sein. Auf vorteilhafte Weise wird dadurch eine einfache Erweiterung des Netzwerks ermöglicht, da im Bedarfsfall ggf. weitere Komponenten in Daisy-Chain-Verschaltung an die erste Sensoreinrichtung angeschlossen werden können, ohne dass hierbei T-Stücke zwischengeschaltet werden müssen. Im Fall, dass keine weiteren Netzwerkkomponenten angeschlossen sind, sollte der jeweils nicht verwendete Anschluss der ersten bzw. zweiten Busschnittstelle zur Vermeidung etwaiger Signalreflexionen, vorzugsweise geräteseitig, mit einem Abschlusswiderstand, z. B. einem 120Ω-Abschlusswiderstand, terminiert werden.

Gemäß einem weiteren Aspekt der Erfindung kann die zweite Sensoreinrichtung als Master-Slave-Einheit ausgebildet sein. Die Master-Slave-Einheit soll hierbei eine, über den zweiten Datenbus mit der Steuereinrichtung und ersten Sensoreinrichtung verbundene, Master-Sensoreinrichtung und zumindest eine, der Master-Sensoreinrichtung nachgeschaltete, Slave-Sensoreinrichtung umfassen. Vorzugsweise sind die Master-Sensoreinrichtung und die zumindest eine Slave-Sensoreinrichtung dabei über eine Daisy-Chain-Verschaltung miteinander verknüpft, sodass auf vorteilhafte Weise keine T-Stück-Verbindungen zwischengeschaltet werden müssen. Beispielsweise kann die Master-Sensoreinrichtung hierfür über eine Busschnittstelle mit zwei gekoppelten bzw. durchgeschleiften Anschlüssen verfügen, wobei ein Anschluss der Slave-Sensoreinrichtung und der andere Anschluss der Steuereinrichtung bzw. der ersten Sensoreinrichtung zugeordnet ist. Auf vorteilhafte Weise kann dadurch insbesondere im Fall, dass mehrere gleichartige Sensoreinrichtungen vorgesehen sind (z. B. mehrere Radareinrichtungen), insgesamt ein effizienter Datenfluss in der Sensorvorrichtung erreicht werden.

Nach einem weiteren Aspekt der Erfindung kann die Sensorvorrichtung ferner eine Kameraeinrichtung, vorzugsweise eine Front-Kameraeinrichtung, zur Aufnahme "dritter" Umfelddaten umfassen. In diesem Zusammenhang soll der Ausdruck "dritte Umfelddaten" lediglich zur besseren Unterscheidung zu den Umfelddaten der bisherigen Sensoreinrichtungen dienen und der Ausdruck "Front-Kameraeinrichtung" eine Kameraeinrichtung bezeichnen, die zur Erfassung eines in normaler Fahrtrichtung im Wesentlichen vor dem Kraftfahrzeug liegenden Bereichs ausgebildet ist. Die Kameraeinrichtung kann hierbei über den ersten Datenbus mit der Steuereinrichtung und der ersten Sensoreinrichtung verbunden sein. Mit anderen Worten kann damit vorrangig eine Übermittlung der von der Kameraeinrichtung erfassten dritten Umfelddaten an die Steuereinrichtung und/oder die erste Sensoreinrichtung erfolgen. Gegebenenfalls können die dritten Umfelddaten - aufgrund der Kopplung des ersten und zweiten Datenbusses über die erste Sensoreinrichtung - jedoch auch "über" die erste Sensoreinrichtung und den daran geschlossenen zweiten Datenbus zur Steuereinrichtung gelangen.

Um in diesem Zusammenhang auf vorteilhafte Weise eine möglichst schnelle und störungsfreie Kommunikation zwischen der Steuereinrichtung und den besonders sicherheitsrelevanten Sensoreinrichtungen (erste und zweite Sensoreinrichtung) zu ermöglichen, kann ferner vorgesehen sein, dass der erste Datenbus ausschließlich die Steuereinrichtung, die erste Sensoreinrichtung und die Kameraeinrichtung verbindet. Mit anderen Worten sollen keine weiteren Teilnehmer (Sensoren, Aktoren etc.) unmittelbar an den ersten Datenbus angeschlossen sein. Die mittelbare Anbindung weiterer Komponenten durch einen Anschluss an den zweiten Datenbus und die Kopplung "über" die erste Sensoreinrichtung sollen hiervon jedoch nicht betroffen sein.

Gemäß einem weiteren Aspekt der Erfindung kann die erste Sensoreinrichtung ferner ausgebildet sein, die ersten, zweiten und dritten Umfelddaten zu fusionieren und die fusionierten Umfelddaten über den ersten Datenbus an die Steuereinrichtung auszugeben. Mit anderen Worten kann auch hier mittels der ersten Sensoreinrichtung ein - der Steuereinrichtung vorgelagertes - Zusammenführen bzw. Vorverarbeiten der Umfelddaten erfolgen. Beispielsweise können dabei die Umfelddaten einer Front-Kameraeinrichtung, einer Front-Radareinrichtung und einer Seitenradar-Radareinrichtung, vorzugsweise zu einem gemeinsamen Umfeldmodell des Kraftfahrzeugs, fusioniert werden. Als Umfeldmodell können hierbei die zusammengetragenen bzw. aufbereiteten Informationen der Sensoreinrichtungen hinsichtlich anderer Verkehrsteilnehmer, Infrastruktur, statischer Objekte, Straßenverhältnisse etc. - d. h. der Fahrzeugumgebung - verstanden werden. Hierzu können im Stand der Technik bekannte Methoden, wie beispielsweise gitterbasierte und/oder objektbasierte Verfahren, zur Umfeldmodellierung und Sensordatenfusion verwendet werden. Auf vorteilhafte Weise kann durch das Zusammenführen bzw. Fusionieren der Sensordaten insgesamt eine genauere Erfassung von Objekten erreicht werden. Zusätzlich ermöglicht die dezentrale Vorverarbeitung bereits zu einem frühen Zeitpunkt, eine entsprechende Selektion und/oder Priorisierung der erfassten Umfeldinformationen durchzuführen, wodurch insgesamt der Datenverkehr im Bussystem optimiert werden kann.

Nach einem weiteren Aspekt der Erfindung kann die erste Sensoreinrichtung ausgebildet sein, auf Basis der Umfelddaten eine Objekterkennung durchzuführen. Mit anderen Worten kann die erste Sensoreinrichtung eine Sensoreinrichtung zur Aufnahme und Analyse von Umfelddaten sein und hierfür vorzugsweise über entsprechende Recheneinrichtungen verfügen. Die Objekterkennung kann hierbei - je nach Bedarfsfall und Vorhandensein entsprechender Sensoreinrichtungen - auf Basis der, ggf. fusionierten, ersten und/oder zweiten und/oder dritten Umfelddaten erfolgen, wobei - bei Vorliegen - zusätzlich auch weitere Umfelddaten weiterer Sensoreinrichtungen berücksichtigt werden können. In Hinblick auf die Objekterkennung selbst können an sich im Stand der Technik bekannte Methoden der Muster- bzw. Objekterkennung verwendet werden, die z. B. ein Identifizieren und vorzugsweise auch ein Lokalisieren von Objekten in der Fahrzeugumgebung ermöglichen. Beispielsweise können hierbei Methoden, die auf einer Kanten-, Größen-, Form- und/oder Farberkennung basieren, eingesetzt werden. Weiterhin kann die erste Sensoreinrichtung ausgebildet sein, die Art, Position und/oder Lage erkannter Objekte über den ersten Datenbus an die Steuereinrichtung auszugeben. Auf vorteilhafte Weise kann durch die der Steuereinrichtung vorgeschalteten Analyse eine effiziente Ausnutzung der vorhandenen Rechenkapazität erreicht werden.

Gemäß einem weiteren Aspekt der Erfindung kann die erste Sensoreinrichtung eine Master-Front-Radareinrichtung und die zweite Sensoreinrichtung - in Bezug auf die erste Sensoreinrichtung - eine Slave-Front-Radareinrichtung sein. Mit anderen Worten sollen sowohl die erste als auch zweite Sensoreinrichtung als Radareinrichtungen zur jeweiligen Erfassung eines in normaler Fahrtrichtung im Wesentlichen vor dem Kraftfahrzeug liegenden Bereichs ausgebildet sein. Vorzugsweise kontrolliert dabei die erste Sensoreinrichtung die Kommunikation bzw. den Datenverkehr der zweiten Sensoreinrichtung und/oder nimmt eine Verarbeitung der zweiten Umfelddaten der zweiten Sensoreinrichtung vor. Dabei kann, falls zweckdienlich, die in Bezug auf die erste Sensoreinrichtung als Slave-Front-Radareinrichtung ausgebildete zweite Sensoreinrichtung wiederum selbst eine Master-Sensoreinrichtung für weitere dieser nachgeschalteten Slave-Sensoreinrichtungen sein. Mit anderen Worten kann somit auch eine mehrstufige Master-Slave-Architektur vorliegen. Auf vorteilhafte Weise kann dadurch wiederum ein effizienter Datenfluss in der Sensorvorrichtung erreicht werden.

Nach einem weiteren Aspekt der Erfindung kann der erste Datenbus als CAN-Bus ausgebildet sein und/oder der zweite Datenbus als CAN-Bus ausgebildet sein. Beim CAN (Controller Area Network) handelt es sich um ein im Stand der Technik etabliertes serielles Bussystem, welches einen robusten Informationsaustausch ermöglicht. Für weitere technische Details in Bezug auf den CAN-Bus sei z. B. auf das "Kraftfahrtechnisches Taschenbuch", 27. Auflage, 2011, S. 1071 ff. verwiesen.

Gemäß einem weiteren Aspekt der Erfindung kann die Steuereinrichtung einen ersten Abschlusswiderstand (z. B. einen 120Ω-Widerstand) zur Terminierung des mit der Steuereinrichtung verbundenen ersten Datenbusses und/oder einen zweiten Abschlusswiderstand (z. B. einen 120Ω-Widerstand) zur Terminierung des mit der Steuereinrichtung verbundenen zweiten Datenbusses umfassen. Mit anderen Worten kann der erste und/oder zweite Abschlusswiderstand ein Teil der Steuereinrichtung sein und/oder unmittelbar an dieser angeordnet sein. Vorzugsweise umfasst die Steuereinrichtung dabei eine dem ersten Datenbus zugeordnete Schnittstelle mit zwei gekoppelten Anschlüssen und eine dem zweiten Datenbus zugeordnete Schnittstelle mit zwei gekoppelten Anschlüssen, wobei jeweils ein Anschluss der entsprechenden Schnittstelle durch einen, vorzugsweise geräteseitigen, Abschlusswiderstand terminiert wird.

Zudem oder alternativ kann auch die erste Sensoreinrichtung einen ersten Abschlusswiderstand zur Terminierung des mit der Steuereinrichtung verbundenen ersten Datenbusses und/oder einen zweiten Abschlusswiderstand zur Terminierung des mit der Steuereinrichtung verbundenen zweiten Datenbusses umfassen. Auch hier soll das vorstehende Merkmal vorzugsweise dahingehend verstanden werden, dass der erste und/oder zweite Abschlusswiderstand ein Teil der ersten Sensoreinrichtung ist und/oder unmittelbar an dieser angeordnet ist. Zudem oder alternativ kann auch die zweite Sensoreinrichtung einen Abschlusswiderstand (z. B. einen 120Ω-Widerstand) zur Terminierung des mit der zweiten Sensoreinrichtung verbundenen zweiten Datenbusses umfassen. Insgesamt können durch die vorgenannten Terminierungen auf vorteilhafte Weise ggf. störende Signalreflexionen an Busleitungsenden vermieden werden.

Die vorstehend zur Charakterisierung der Sensorvorrichtung verwendeten Zahlenangaben "erste", "zweite", "dritte" etc. sollen dabei - außer falls explizit gegenteilig erwähnt - nicht als abschließende Angaben aufgefasst werden. So ist es für den Fachmann unmittelbar ersichtlich, dass die Sensorvorrichtung um weitere Komponenten bzw. Busteilnehmer (z. B. weitere Sensoreinrichtungen, Aktoren etc.) erweitert werden kann, ohne den Bereich der Erfindung zu verlassen. Beispielsweise kann die Sensorvorrichtung zumindest eine vierte Sensoreinrichtung aufweisen, wobei die zumindest eine vierte Sensoreinrichtung über den zweiten Datenbus mit der Steuereinrichtung, der ersten Sensoreinrichtung und der zweiten Sensoreinrichtung verbunden sein kann.

Weiterhin wird ein Kraftfahrzeug bereitgestellt, umfassend eine Sensorvorrichtung zur Umfelderfassung wie in diesem Dokument beschrieben. Vorzugsweise handelt es sich bei dem Kraftfahrzeug um ein Nutzfahrzeug. Mit anderen Worten kann es sich bei dem Kraftfahrzeug um ein Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Kraftfahrzeug um einen Lastkraftwagen, einen Omnibus und oder einen Sattelzug handeln.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine schematische Darstellung einer Sensorvorrichtung zur Umfelderfassung für ein Kraftfahrzeug gemäß einer ersten Ausführungsform der Erfindung;
- Figur 2:: eine schematische Darstellung einer Sensorvorrichtung zur Umfelderfassung für ein Kraftfahrzeug gemäß einer zweiten Ausführungsform der Erfindung;
- Figur 3:: eine schematische Darstellung einer Sensorvorrichtung zur Umfelderfassung für ein Kraftfahrzeug gemäß einer dritten Ausführungsform der Erfindung;
- Figur 4:: eine schematische Darstellung einer Sensorvorrichtung zur Umfelderfassung für ein Kraftfahrzeug gemäß einer vierten Ausführungsform der Erfindung; und
- Figur 5:: eine schematische Darstellung eines Kraftfahrzeugs in Seitenansicht gemäß einer Ausführungsform der Erfindung.

Gleiche oder funktional äquivalente Elemente sind dabei in allen Figuren mit denselben Bezugszeichen bezeichnet und zum Teil nicht gesondert beschrieben.

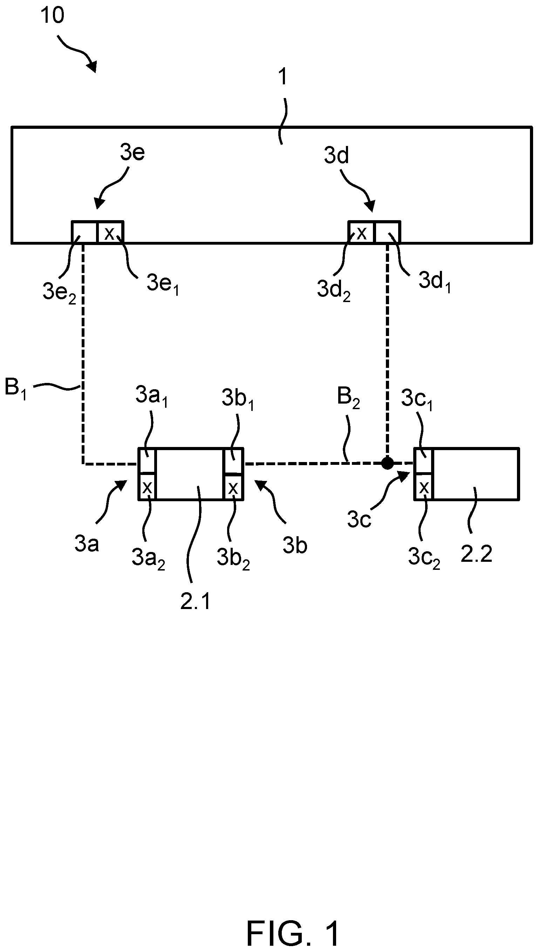

Figur 1 zeigt eine schematische Darstellung einer Sensorvorrichtung 10 zur Umfelderfassung für ein Kraftfahrzeug 20 gemäß einer ersten Ausführungsform der Erfindung. Die Sensorvorrichtung 10 umfasst dabei eine, vorzugsweise zentrale, Steuereinrichtung 1. Diese kann beispielsweise in Form eines Steuergeräts für ein Kraftfahrzeug 20 ausgebildet sein und zudem oder alternativ auch eine oder mehrere Rechen- und/oder Speichereinrichtungen umfassen. Vorzugsweise ist die Steuereinrichtung 1 ferner zur Verarbeitung sensorisch erfasster Umfelddaten eingerichtet, um dadurch beispielsweise verschiedene Fahrerassistenzfunktionen zu realisieren. Mit anderen Worten kann die Steuereinrichtung 1 ausgebildet sein, Informationen von Sensoren aufzunehmen, zu verarbeiten und/oder entsprechende Signale an Aktuatoren auszugeben.

Weiterhin umfasst die in Figur 1 dargestellte Sensorvorrichtung 10 zur Umfelderfassung eine Sensoreinrichtung 2.1 (z. B. eine Front-Radareinrichtung), die im Folgenden zur besseren Unterscheidbarkeit von weiteren Sensoreinrichtungen als "erste Sensoreinrichtung" 2.1 bezeichnet werden soll. Die erste Sensoreinrichtung 2.1 soll hierbei zur Aufnahme "erster", d. h. der ersten Sensoreinrichtung 2.1 zugeordneter, Umfelddaten ausgebildet sein. Diese können z. B. Informationen bezüglich anderen Verkehrsteilnehmern, der Infrastruktur, statischer Objekte und/oder den Straßenverhältnissen in einem Frontbereich des Kraftfahrzeugs 20 enthalten. Zur Kommunikation zwischen der ersten Sensoreinrichtung 2.1 und der Steuereinrichtung 1 umfasst die Sensorvorrichtung 10 einen, vorzugsweise als CAN-Bus ausgebildeten, ersten Datenbus B₁, der die erste Sensoreinrichtung 2.1 mit der Steuereinrichtung 1 signaltechnisch verbindet.

Weiterhin umfasst die Sensorvorrichtung 10 zur Umfelderfassung eine weitere, d. h. zweite, Sensoreinrichtung 2.2 (z. B. eine Seiten-Radareinrichtung). Diese zweite Sensorvorrichtung 2.2 soll dabei zur Aufnahme "zweiter", d. h. der zweiten Sensoreinrichtung 2.2 zugeordneter, Umfelddaten ausgebildet sein. Diese können z. B. Informationen über andere Verkehrsteilnehmer, die Infrastruktur, statische Objekte und/oder die Straßenverhältnisse in einem Seitenbereich des Kraftfahrzeugs 20 umfassen. Zur Übermittlung dieser zweiten Umfelddaten an die Steuereinrichtung 1 weist die Sensorvorrichtung 10 einen vorzugsweise als CAN-Bus ausgebildeten, zweiten Datenbus B₂ auf, der die zweite Sensoreinrichtung 2.2 mit der Steuereinrichtung 1 signaltechnisch verbindet. Zusätzlich ist jedoch auch eine Verbindung des zweiten Datenbusses B₂ zur ersten Sensorvorrichtung 2.1 vorgesehen, sodass vorliegend die erste und zweite Sensorvorrichtung 2.1 und 2.2 sowie die Steuereinrichtung 1 über den zweiten Datenbus B₂ verbunden sind. Auf vorteilhafte Weise wird dadurch ein Datenaustausch zwischen den beiden Datenbussen B₁ und B₂ "über" die erste Sensoreinrichtung 2.1 ermöglicht, wodurch je nach Anwendungsfall verschiedene Übertragungskanäle zur Verfügung stehen.

Insbesondere im Fall, dass der erste und zweite Datenbus B₁ und B₂ als CAN-Bus ausgebildet sind, können die jeweiligen Komponenten der Sensorvorrichtung 10 über entsprechende Busschnittstellen (z. B. in Form von CAN-Transceivern) mit je zwei gekoppelten bzw. durchgeschleiften Anschlüssen verfügen, die auch als "Eingang" und "Ausgang" bezeichnet werden können und mittels derer ein Daisy-Chaining erfolgen kann. Vorzugsweise werden dabei diejenigen Anschlüsse, die nicht mit weiteren Busteilnehmern verbunden sind, zur Terminierung der Busleitung durch einen, vorzugsweise geräteseitigen, Abschlusswiderstand (z. B. einen 120Ω-Widerstand) terminiert, was in Figur 1 - wie auch nachfolgend - durch ein "x"-Symbol angezeigt werden soll. Im Detail kann somit z. B. die erste Sensoreinrichtung 2.1 eine erste Busschnittstelle 3a mit zwei gekoppelten Anschlüssen 3a₁ und 3a₂ sowie eine zweite Busschnittstelle 3b mit zwei gekoppelten Anschlüssen 3b₁ und 3b₂ umfassen, wobei der Anschluss 3a₁ an den ersten Datenbus B₁ und der Anschluss 3b₁ an den zweiten Datenbus B₂ angebunden sein kann und die Anschlüsse 3a₂ und 3b₂ durch entsprechende Abschlusswiderstände terminiert werden. Entsprechend kann auch die zweite Sensoreinrichtung 2.2 eine Busschnittstelle 3c mit zwei gekoppelten Anschlüssen 3c₁ und 3c₂ umfassen, wobei der Anschluss 3c₁ an den zweiten Datenbus B₂ angebunden sein kann und der Anschluss 3c₂ durch einen Abschlusswiderstand terminiert wird. Letztlich kann auch die Steuereinrichtung 1 eine erste Busschnittstelle 3d mit zwei gekoppelten Anschlüssen 3d₁ und 3d₂ sowie eine zweite Busschnittstelle 3e mit zwei gekoppelten Anschlüssen 3e₁ und 3e₂ umfassen, wobei der Anschluss 3e₁ an den ersten Datenbus B₁ und der Anschluss 3d₁ an den zweiten Datenbus B₂ angebunden sein kann und die Anschlüsse 3e₂ und 3d₂ durch entsprechende Abschlusswiderstände terminiert werden.

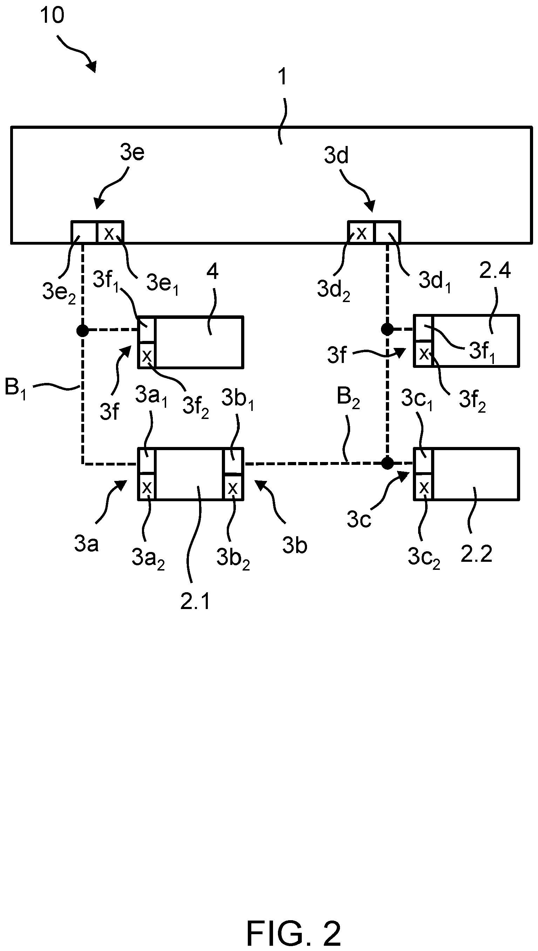

Figur 2 zeigt eine schematische Darstellung einer Sensorvorrichtung 10 zur Umfelderfassung für ein Kraftfahrzeug 20 gemäß einer zweiten Ausführungsform der Erfindung. In Weiterbildung der in Figur 1 gezeigten Ausführungsform umfasst die Sensorvorrichtung 10 dabei zusätzlich eine Kameraeinrichtung 4, vorzugsweise eine Front-Kameraeinrichtung, zur Aufnahme dritter Umfelddaten. Die Kameraeinrichtung 4 ist dabei über den ersten Datenbus B₁ mit der Steuereinrichtung 1 und der ersten Sensoreinrichtung 2.1 verbunden. Hierzu kann die Kameraeinrichtung 4 wiederum eine Busschnittstelle 3f mit zwei gekoppelten Anschlüssen 3f₁ und 3f₂ umfassen, wobei der Anschluss 3f₁ an den ersten Datenbus B₁ angebunden sein kann und der Anschluss 3f₂ durch einen Abschlusswiderstand terminiert sein kann.

Vorzugsweise kann in diesem Zusammenhang die erste Sensoreinrichtung 2.1 ferner ausgebildet sein, die ersten und dritten Umfelddaten zu fusionieren und die fusionierten Umfelddaten über den ersten Datenbus B₁ an die Steuereinrichtung 1 auszugeben. Mit anderen Worten kann mittels der ersten Sensoreinrichtung 2.1 ein - der Steuereinrichtung 1 vorgelagertes - Zusammenführen bzw. Vorverarbeiten der Umfelddaten erfolgen. Beispielsweise können so die Umfelddaten einer Front-Kameraeinrichtung und einer Front-Radareinrichtung zu einem gemeinsamen Umfeldmodell des Kraftfahrzeugs 20 fusioniert werden, wodurch auf vorteilhafte Weise eine bessere Erfassung von Objekten erreicht werden kann. Zusätzlich ermöglicht die Vorverarbeitung, bereits zu einem frühen Zeitpunkt eine entsprechende Selektion und/oder Priorisierung der erfassten Umfeldinformationen durchzuführen, wodurch insgesamt der Datenverkehr im Bussystem optimiert werden kann.

Weiterhin umfasst die in Figur 2 gezeigte Sensorvorrichtung 10 zur Umfelderfassung eine weitere, hier als "vierte" Sensoreinrichtung 2.4 bezeichnete, Sensoreinrichtung 2.4. Diese vierte Sensorvorrichtung 2.4 soll dabei zur Aufnahme "vierter", d. h. der vierten Sensoreinrichtung 2.4 zugeordneter, Umfelddaten ausgebildet sein. Diese können z. B. Informationen über andere Verkehrsteilnehmer, die Infrastruktur, statische Objekte und/oder die Straßenverhältnisse in einem Heckbereich des Kraftfahrzeugs 20 umfassen. Die vierte Sensorvorrichtung 2.4 ist hierbei über den zweiten Datenbus B₂ mit der ersten und zweite Sensorvorrichtung 2.1 und 2.2 sowie der Steuereinrichtung 1 verbunden. Im Fall, dass die die erste Sensoreinrichtung 2.1 für eine Fusionierung der Umfelddaten ausgebildet ist, können hierbei auch die vierten Umfelddaten der vierten Sensoreinrichtung 2.4 mitverarbeitet werden. Zudem oder alternativ kann mittels der ersten Sensoreinrichtung 2.1 jedoch auch eine Steuerung des Datenflusses erfolgen, sodass die vierten Umfelddaten der vierten Sensorvorrichtung 2.4 sowohl mittels des zweiten Datenbusses B₂ als auch "über" die erste Sensoreinrichtung 2.1 und den ersten Datenbus B₁ zur Steuereinrichtung 1 gelangen können. Im Fall, dass der zweite Datenbus B₂ als CAN-Bus ausgebildet ist, kann die vierte Sensoreinrichtung 2.4 wiederum auch eine Busschnittstelle 3f (z. B. in Form eines CAN-Transceivers) mit zwei gekoppelten Anschlüssen 3f₁ und 3f₂ umfassen, wobei der Anschluss 3f₁ an den zweiten Datenbus B₂ angebunden sein kann und der Anschluss 3f₂ durch einen Abschlusswiderstand terminiert wird.

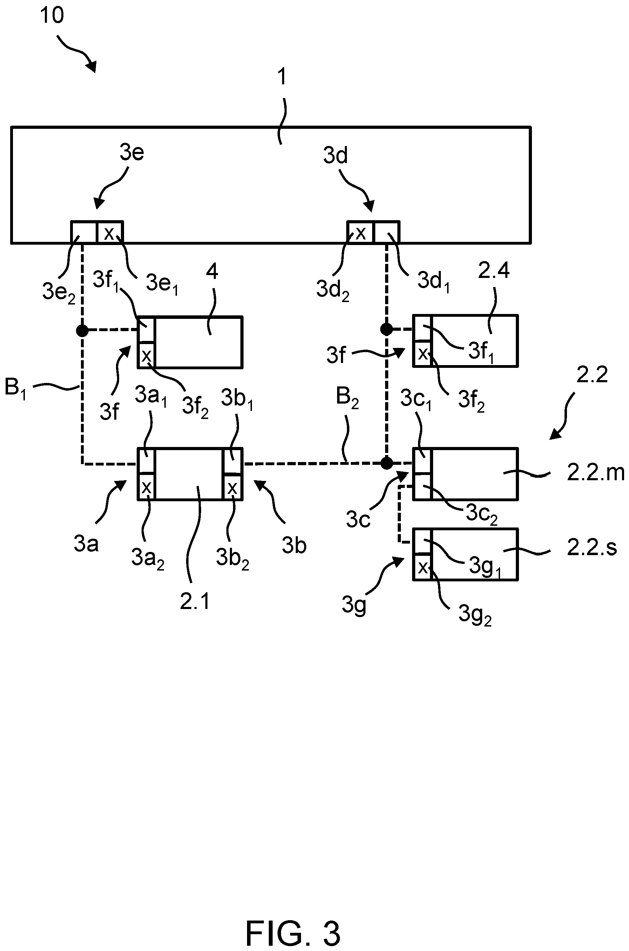

Figur 3 zeigt eine schematische Darstellung einer Sensorvorrichtung 10 zur Umfelderfassung für ein Kraftfahrzeug 20 gemäß einer dritten Ausführungsform der Erfindung. Im Unterschied zu der in Figur 2 gezeigten Ausführungsform ist hierbei die zweite Steuereinrichtung 2.2 in Form einer Master-Slave-Einheit ausgebildet. Dabei umfasst die Master-Slave-Einheit eine, über den zweiten Datenbus B₂ mit der Steuereinrichtung 1 und ersten Sensoreinrichtung 2.1 verbundene, Master-Sensoreinrichtung 2.2.m und eine, der Master-Sensoreinrichtung 2.2.m nachgeschaltete, Slave-Sensoreinrichtung 2.2.s. Vorzugsweise sind die Master- und Slave-Sensoreinrichtungen 2.2.m und 2.2.s dabei - wie dargestellt - über eine Daisy-Chain-Verschaltung miteinander verknüpft. Dazu kann die Slave-Sensoreinrichtung 2.2.s über eine CAN-Verbindung an den Anschluss 3c₂ angeschlossen sein, wobei dieser in der Master-Sensoreinrichtung 2.2.m zum Anschluss 3c₁ durchgeschleift ist, über welchen (Anschluss 3c₁) die Master-Sensoreinrichtung 2.2.m sodann an den zweiten Datenbus B₂ angebunden ist. Die Slave-Sensoreinrichtung 2.2.s selbst kann dabei die Busschnittstelle 3g mit zwei gekoppelten Anschlüssen 3g₁ und 3g₂ umfassen, wobei mittels des Anschlusses 3g₁ die Verbindung zur Master-Sensoreinrichtung 2.2.m erfolgt und der Anschluss 3g₂ durch einen entsprechenden Abschlusswiderstand terminiert wird.

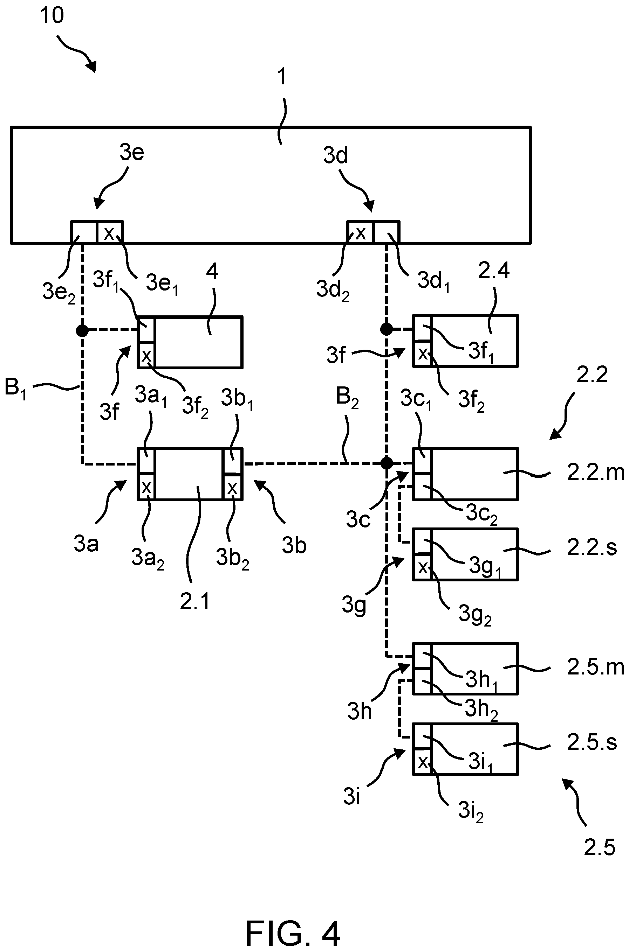

Figur 4 zeigt eine schematische Darstellung einer Sensorvorrichtung 10 zur Umfelderfassung für ein Kraftfahrzeug 20 gemäß einer vierten Ausführungsform der Erfindung. Basierend auf der in Figur 3 gezeigten Ausführungsform umfasst die vorliegende Variante zusätzlich eine weitere als Master-Slave-Einheit ausgebildete und an den zweiten Datenbus B₂ angebundene Sensoreinrichtung 2.5, die zur besseren Unterscheidung nachfolgend als "fünfte" Sensoreinrichtung 2.5 bezeichnet werden soll. Mit anderen Worten steht die "fünfte" Sensoreinrichtung 2.5 über den zweiten Datenbus B₂ signaltechnisch mit der Steuereinrichtung 1 der ersten, zweiten und vierten Sensoreinrichtung 2.1, 2.2 und 2.5 in Verbindung. Wie auch die als Master-Slave-Einheit ausgebildete vierte Steuereinrichtung 2.4 umfasst auch die fünfte Steuereinrichtung 2.5 eine Master-Sensoreinrichtung 2.5.m und eine, der Master-Sensoreinrichtung 2.5.m in Daisy-Chain-Verschaltung nachgeschaltete, Slave-Sensoreinrichtung 2.5.s. Im Detail kann hierbei die Master-Sensoreinrichtung 2.5.m eine Busschnittstelle 3h mit zwei gekoppelten Anschlüssen 3h₁ und 3h₂ und die Slave-Sensoreinrichtung 2.5.s eine Busschnittstelle 3i mit zwei gekoppelten Anschlüssen 3i₁ und 3i₂ umfassen, wobei die Ankopplung der Slave-Sensoreinrichtung 2.5.s an den zweiten Datenbus B₂ ausgehend vom Anschluss 3i₁ über die durchgeschleiften Anschlüsse 3h₁ und 3h₂ der Master-Sensoreinrichtung 2.5.m erfolgt.

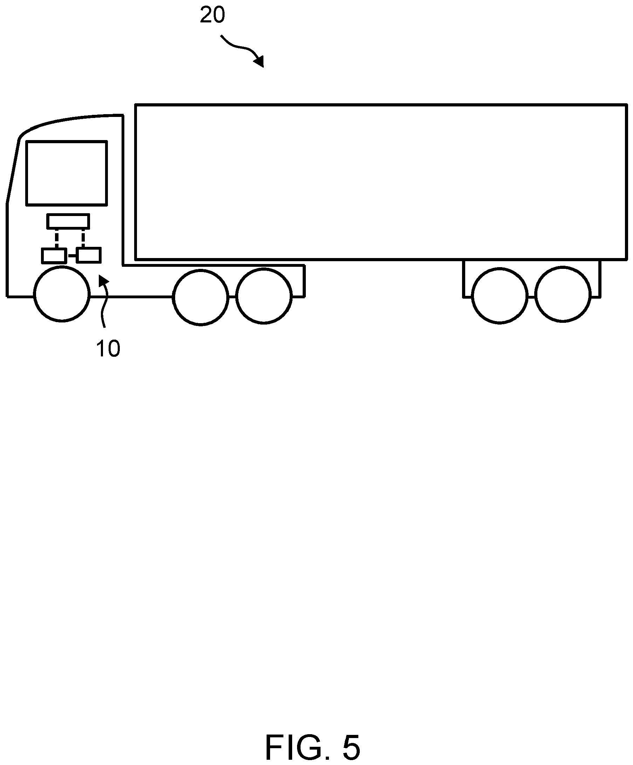

Figur 5 zeigt eine schematische Darstellung eines Kraftfahrzeugs 20 in Seitenansicht gemäß einer Ausführungsform der Erfindung. Das Kraftfahrzeug 20, bei welchem es sich vorliegend lediglich beispielshaft um ein Sattelkraftfahrzeug, d. h. ein Gespann aus einer Sattelzugmaschine und einem Sattelanhänger, handelt, soll hierbei eine Sensoreinrichtung 10 zur Umfelderfassung wie in diesem Dokument beschrieben umfassen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Steuereinrichtung
- 2.1, 2.2, 2.3, 2.4, 2.5: Sensoreinrichtung
- 2.2.m, 2.5.m: Master-Sensoreinrichtung
- 2.2.s, 2.5.s: Slave-Sensoreinrichtung
- 3a, 3b, 3c, 3d, 3e, 3f, 3g, 3h, 3i: Busschnittstelle
- 3a₁, 3a₂, 3b₁, 3b₂, 3c₁, 3c₂,: Anschluss
- 3d₁, 3d₂,3e₁, 3e₂, 3f₁, 3f₂,: Anschluss
- 3g₁, 3g₂, 3h₁, 3h₂, 3i₁, 3i₂: Anschluss
- 4: Kameraeinrichtung
- 10: Sensorvorrichtung
- 20: Kraftfahrzeug
- B₁: Erster Datenbus
- B₂: Zweiter Datenbus

## Patentansprüche

1. Sensorvorrichtung (10) zur Umfelderfassung für ein Kraftfahrzeug (20), umfassend:
- eine Steuereinrichtung (1) zur Verarbeitung sensorisch erfasster Umfelddaten;
- eine erste Sensoreinrichtung (2.1), vorzugsweise eine Front-Radareinrichtung, zur Aufnahme erster Umfelddaten, wobei die erste Sensoreinrichtung (2.1) über einen, vorzugsweise als CAN-Bus ausgebildeten, ersten Datenbus (B₁) mit der Steuereinrichtung (1) verbunden ist; und
- eine zweite Sensoreinrichtung (2.2), vorzugsweise eine Seiten-Radareinrichtung, zur Aufnahme zweiter Umfelddaten;
**dadurch gekennzeichnet, dass** die zweite Sensoreinrichtung (2.2) über einen, vorzugsweise als CAN-Bus ausgebildeten, zweiten Datenbus (B₂) sowohl mit der Steuereinrichtung (1) als auch mit der ersten Sensoreinrichtung (2.1) verbunden ist.

2. Sensorvorrichtung (10) nach Anspruch 1, **dadurch gekennzeichnet, dass** die erste Sensoreinrichtung (2.1) ausgebildet ist, zweite Umfelddaten über den zweiten Datenbus (B₂) zu empfangen, die ersten Umfelddaten mit den zweiten Umfelddaten zu fusionieren und die fusionierten Umfelddaten über den ersten Datenbus (B₁) an die Steuereinrichtung (1) auszugeben.

3. Sensorvorrichtung (10) nach einem der vorherigen Ansprüche, **dadurch gekennzeichnet, dass** der erste Datenbus (B₁) eine höhere, vorzugsweise eine doppelt oder vielfach so hohe, Übertragungsrate als der zweite Datenbus (B₂) aufweist, wobei vorzugsweise der zweite Datenbus (B₂) eine Übertragungsrate von maximal 1 Mbit/s aufweist.

4. Sensorvorrichtung (10) nach einem der vorherigen Ansprüche, **dadurch gekennzeichnet,**
a) **dass** der erste Datenbus (B₁) eine Übertragungsrate über 1 Mbit/s aufweist; und/oder
b) **dass** der erste Datenbus (B₁) eine Übertragungsrate von maximal 2 Mbit/s, vorzugsweise maximal 4 Mbit/s, besonders bevorzugt maximal 8 Mbit/s, aufweist; und/oder
c) **dass** der erste Datenbus (B₁) als ein CAN-FD-Bus ausgebildet ist.

5. Sensorvorrichtung (10) nach einem der vorherigen Ansprüche, **dadurch gekennzeichnet, dass** die erste Sensoreinrichtung (2.1)
a) eine Front-Radareinrichtung des Kraftfahrzeugs (20) ist; und/oder
b) eine erste Busschnittstelle (3a) mit zwei gekoppelten Anschlüssen (3a₁, 3a₂) und eine zweite Busschnittstelle (3b) mit zwei gekoppelten Anschlüssen (3b₁, 3b₂) umfasst, wobei die erste Busschnittstelle (3a) an den ersten Datenbus (B₁) und die zweite Busschnittstelle (3b) an den zweiten Datenbus (B₂) angeschlossen ist.

6. Sensorvorrichtung (10) nach einem der vorherigen Ansprüche, **dadurch gekennzeichnet, dass** die zweite Sensoreinrichtung (2.2) als Master-Slave-Einheit ausgebildet ist, umfassend:
a) eine Master-Sensoreinrichtung (2.2.m), die über den zweiten Datenbus (B₂) mit der Steuereinrichtung (1) und ersten Sensoreinrichtung (2.1) verbunden ist; und
b) zumindest eine, der Master-Sensoreinrichtung (2.2.m) nachgeschaltete, Slave-Sensoreinrichtung (2.2.s).

7. Sensorvorrichtung (10) nach einem der vorherigen Ansprüche, **gekennzeichnet durch** eine Kameraeinrichtung (4), vorzugsweise eine Front-Kameraeinrichtung, zur Aufnahme dritter Umfelddaten, wobei die Kameraeinrichtung (4) über den ersten Datenbus (B₁) mit der Steuereinrichtung (1) und der ersten Sensoreinrichtung (2.1) verbunden ist.

8. Sensorvorrichtung (10) nach Anspruch 7, **dadurch gekennzeichnet, dass** der erste Datenbus (B₁) ausschließlich die Steuereinrichtung (1), die erste Sensoreinrichtung (2.1) und die Kameraeinrichtung (4) verbindet.

9. Sensorvorrichtung (10) nach Anspruch 7 oder 8, **dadurch gekennzeichnet, dass** die erste Sensoreinrichtung (2.1) ausgebildet ist, die ersten, zweiten und dritten Umfelddaten zu fusionieren und die fusionierten Umfelddaten über den ersten Datenbus (B₁) an die Steuereinrichtung (1) auszugeben.

10. Sensorvorrichtung (10) nach einem der Ansprüche 7 bis 9, **dadurch gekennzeichnet, dass** die erste Sensoreinrichtung (2.1) ausgebildet ist, auf Basis der ersten, zweiten und dritten Umfelddaten eine Objekterkennung durchzuführen und die Art, Position und/oder Lage erkannter Objekte über den ersten Datenbus (B₁) an die Steuereinrichtung (1) auszugeben.

11. Sensorvorrichtung (10) nach einem der vorherigen Ansprüche, **dadurch gekennzeichnet, dass** die erste Sensoreinrichtung (2.1) eine Master-Front-Radareinrichtung und die zweite Sensoreinrichtung (2.2) in Bezug auf die erste Sensoreinrichtung (2.1) eine Slave-Front-Radareinrichtung ist.

12. Sensorvorrichtung (10) nach einem der vorherigen Ansprüche, **dadurch gekennzeichnet, dass** der erste Datenbus (B₁) als CAN-Bus ausgebildet ist und/oder der zweite Datenbus (B₂) als CAN-Bus ausgebildet ist.

13. Sensorvorrichtung (10) nach einem der vorherigen Ansprüche, **dadurch gekennzeichnet,**
a) **dass** die Steuereinrichtung (1) einen ersten Abschlusswiderstand zur Terminierung des mit der Steuereinrichtung (1) verbundenen ersten Datenbusses (B₁) und/oder einen zweiten Abschlusswiderstand zur Terminierung des mit der Steuereinrichtung (1) verbundenen zweiten Datenbusses (B₂) umfasst; und/oder
b) **dass** die erste Sensoreinrichtung (2.1) einen ersten Abschlusswiderstand zur Terminierung des mit der Steuereinrichtung (1) verbundenen ersten Datenbusses (B₁) und/oder einen zweiten Abschlusswiderstand zur Terminierung des mit der Steuereinrichtung (1) verbundenen zweiten Datenbusses (B₂) umfasst; und/oder
c) **dass** die zweite Sensoreinrichtung (2.2) einen Abschlusswiderstand zur Terminierung des mit der zweiten Sensoreinrichtung (2.2) verbundenen zweiten Datenbusses (B₂) umfasst.

14. Kraftfahrzeug (20), vorzugsweise Nutzfahrzeug, umfassend eine Sensorvorrichtung (10) zur Umfelderfassung nach einem der Ansprüche 1 bis 13.
